# EUROPEAN PATENT SPECIFICATION

(11) **EP 2 327 289 B1**
(45) Date of publication and mention of the grant of the patent: **19.12.2012**
(21) Application number: 10189960.7
(22) Date of filing: 04.11.2010
(51) Int. Cl.: A01D 78/00, A01D 78/04

(54) **Mounted swather**
Anbauschwader
Andaineur monté

(30) Priority: 06.11.2009 FI 20090413
(43) Date of publication of application: 01.06.2011
(73) Proprietor: Oy El-Ho Ab, 68910 Bennäs (FI)
(72) Inventor: Löfbacka, Johan, 68930 Purmo (FI); Forsén, Peter, 68920 Forsby (FI); Häggblom, Karl-Erik, 67600 Karleby (FI)
(74) Representative: Niemi, Hakan Henrik

(56) References cited:
- EP-A2- 2 030 499
- FR-A1- 2 909 834
- NL-A- 8 902 002
- US-A- 3 104 513
- US-A- 3 834 142

## Description

### TECHNICAL FIELD

The present invention relates to a device according to the preamble of the main claim.

Such a device is utilized in agriculture for harvesting forage, such as grass, hey or straw, and it comprises a mounted swather provided with two work units of a type of inclined horizontal rotors that are hung on a bearing frame. Rake teeth in these horizontal rotors are arranged on bars that reside horizontally in a working position. Advantageously, the swather may be set so as to optimize the visibility ahead in a transport position when it is installed in a tractor's front lift, and may further be provided with equipment for increasing the swathing capacity e.g. if the swather is installed at the rear of the tractor during road transportation.

### BACKGROUND ART

In agriculture, simultaneously with the ever-increasing requirements for higher capacity in harvesting forage, many different embodiments of swathers have been provided recently. As fuel and workforce costs have increased, it has become more and more desirable to be able to carry out more than one working phase at one run. This can be clearly seen in the many different types of combinations of machinery that have been developed mainly for soil cultivation and sowing. As to harvesting forage, such as grass, hey or straw, this trend is not nearly as obvious. Most swathers, like the one disclosed e.g. in Patent Application FI 20070375 (Oy El-Ho Ab), are constructed to be run in a separate working phase. Like most swathers provided with two inclined horizontal rotors, this swather is of a towed type, which makes it difficult to combine with a harvester connected to the same tractor.

Some examples of swathing and harvesting being included in the same working phase do exist on the market. For instance, a Spanish manufacturer by the name Agricola Mur show on their website (www.agricolamur.es) a towed swather ("Rastrillo hilerador central") provided with two inclined horizontal rotors, wherein the swather is constructed to be connected by a subsequent baling press. Such a combination increases the capacity of the press significantly. However, since the combination has two joint points, it is difficult to move backwards but is relatively well suitable for the large Spanish cereal fields where manoeuvring capability in areas of turning headland is less essential.

Of course, grass cultivation usually takes place on smaller fields. Particularly in areas of rolling country and in Scandinavia, the fields are relatively small and irregular. This necessitates flexible machine combinations; consequently, it would be quite natural to connect a swather to a front part of a tractor.

A French manufacturer by the name Gyrland present a swather called FAST GAP 600 (www.gyrland.fr) which is provided with two vertical rotors suitable for front mounting. However, the working principle of the vertical rotors of moving a material along the ground suffers from the drawback that soil impurities and stones become easily collected in swaths. Further, it is necessary for the rotors to have a large diameter in order to achieve a sufficient working width. Consequently, the transport volume and, in particular, the transport height then increase and jeopardize stability. If the machine is front-mounted, in a transport position the centrally positioned massive drive of the vertical rotors and the steering gear of the pin beams as well as the support wheel construction come to reside at a height corresponding with that of the driver's view, which impedes and endangers transportation on public roads. Therefore, Gyrland have developed a system which enables a machine to be connected to the rear of a tractor for road transportation. Such a rearrangement is, however, time-consuming, taking about 20 minutes.
In the patent publication NL 8 902 002 C.van der Lely N.V. presents a side delivery rake, with one or two inclined rotors. This rake can be mounted either in the front or to the rear of a tractor. Having a working width only slightly wider than the width of the tractor and the total width of the rake being within legal road transport dimensions, the rake remains below the drivers view and no particular solutions are needed for road transport and to ensure the driver enough free sight during it.
Sofibrie SNC presents in a patent publication FR 2 909 834 a multiple element rake. This rake can be mounted either in the front or to the rear of a tractor. The working elements of the rake consist of an endless conveyor equipped with a plurality of pins. The big working width requires folding the rake to reduce the transport width into legal dimensions. The document does however not present a solution how to ensure the driver acceptable sight to the road-traffic with the raking elements in transport position.

### PROBLEM DEFINITION

In order to alleviate the drawbacks of the above-disclosed and other known solutions and in order to be able in a flexible and cost-efficient manner to swathe forage in the same working phase as harvesting e.g. by means of a baling press or a pickup vehicle, a mounted swather with two inclined horizontal rotors is now provided. Advantageously, swathing rotors may have a configuration including thin flexible pin beams similar to that disclosed in FI 121360B entitled "Arbetselement for strängläggare" (Oy EI-Ho Ab).

This task is fulfilled in accordance with the invention by providing the mounted swather according to the invention with the characterizing features disclosed in claim 1. Suitable further developments and variations of the invention that further improve the operation of the swather are disclosed in the subsequent dependent claims.

The device according to the present invention enables several considerable advantages to be achieved over the known state of the art. Thus, the main advantages of the invention include e.g. that the swather has a large working width and may advantageously be mounted at the front of a tractor. In connection with front mounting, the machine in a transport position may thus be positioned so that the more compact components, rotor drive, pin steering, and support wheels reside in an area above and beneath the driver's normal view in traffic.

In order to obtain the best possible view ahead during road transportation, the rotors may be individually set such that the pin and frame beams that in a transport position reside vertically now reside to the highest possible degree behind one another in the driver's line of vision.

The swather is arranged to gather the material in a swath which substantially coincides with the central line of the tractor.

The horizontal rotors of the swather are forward inclined in a transport position, and the rotor drive resides in the lower end of the rotors, which enables an advantageously low centre of gravity to be obtained in the transport position.

A device according to the present invention is narrow and compact during transportation. A maximum transport width of 2.5 m and a transport height of less than 4 m generally accepted in Europe are easily achieved.

Further advantages and details of the invention are set forth in closer detail in the following description.

### SUMMARY OF THE FIGURES

In the following, the invention will be described by means of the following schematic drawings, in which
Figure 1 shows a swather in a working position, as seen obliquely from behind and above,
Figure 2 shows the same device front-mounted in a transport position, as seen from a driver's place with the driver's normal view designated in broken lines,
Figure 3 shows a principle for a positioning system by which horizontal rotors may be locked in to a transport position wherein pin beams are the least obstructive to the view ahead,
Figure 4 shows a section of a sprung locking device in Figure 3,
Figure 5 shows an inclined horizontal rotor wherein readily detachable guide plates have been installed on pin beams in order to increase swathing capacity,
Figure 6 shows a guide plate according to Figure 5,
Figure 7 shows the swather in a working position, as seen obliquely from the front and above, provided with a fastening bracket to enable the swather to be readily connected e.g. to a normal three-point lifting device provided in a rear part of a tractor.

### PREFERRED EMBODIMENT

The aforementioned figures do not show the mounted swather in scale but their only purpose is to illustrate the operation of the constructive solutions of the preferred embodiment. The constructive parts shown in the figures and designated by reference numerals thus correspond with the constructive solutions disclosed in the description below.

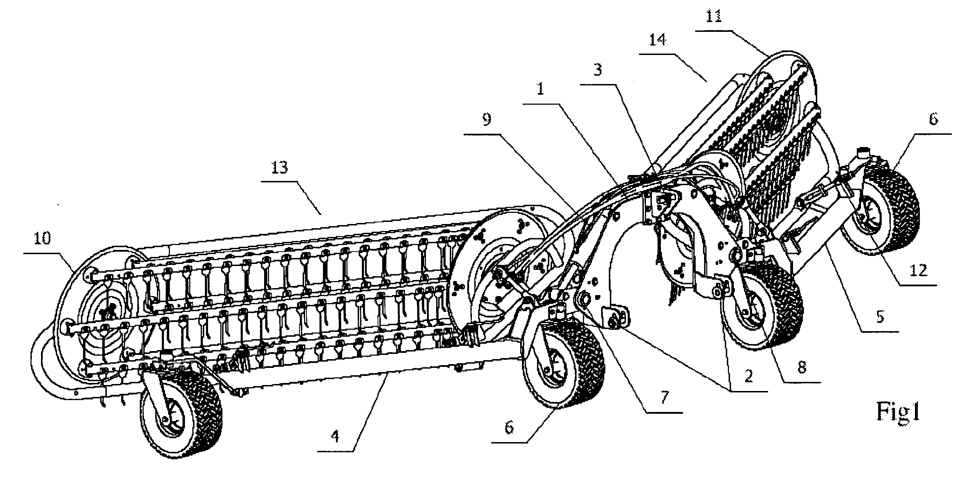

The device in Figure 1 comprises a central frame 1 which on its side opposite to a driving direction is provided with fasteners 2 and 3 for connecting the device to a three-point connection provided at the front of a tractor or, without any modification, to a three-point connection provided at the rear of a tractor if the tractor is equipped for a reversible driving position. The device further comprises a left and a right secondary frame 4 and 5, respectively, equipped with support wheels 6. The secondary frames are flexibly attached to the central frame 1 by mainly horizontal pivot pins 7 and 8 around which the secondary frames may be lifted up in a transport position by means of hydraulic cylinders 9. The inclined horizontal rotors 10 and 11 are installed in the secondary frames by spring-unloaded linkage arms provided with an elevation adjustment 12 for respective rotors 13 and 14. The figure also shows numerous rake teeth installed in bars which in their working position are located substantially horizontally in the horizontal rotors.

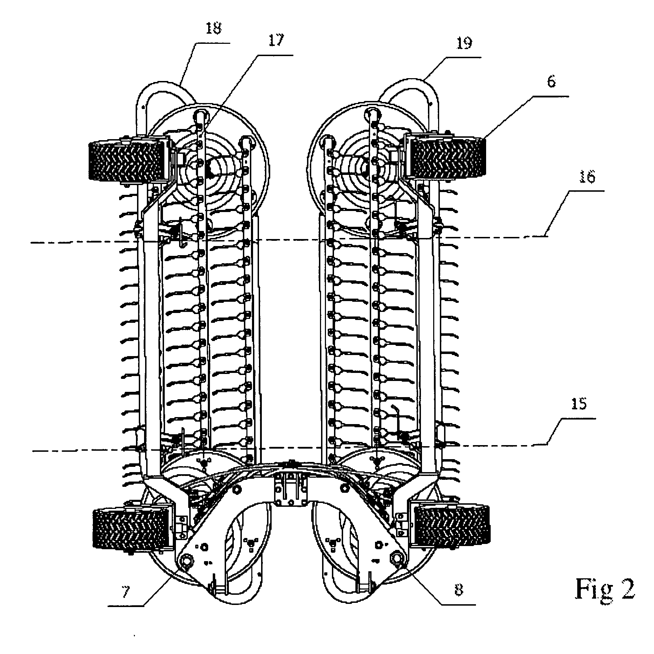

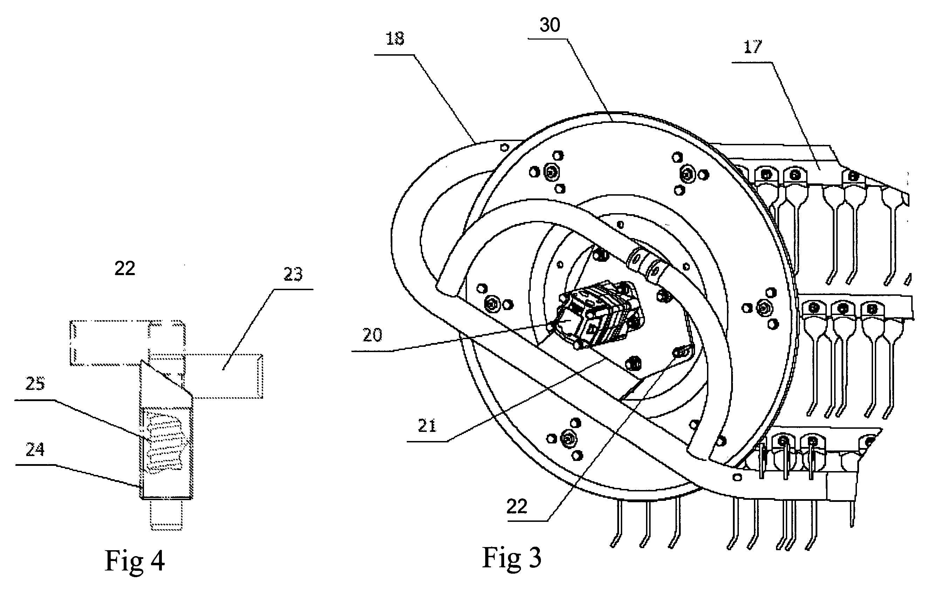

Figure 2 shows the same device arranged in its transport position for road transportation wherein pin beams 17 are substantially in a vertical plane parallel to the driving direction, as seen from the driver's place and the driver's normal horizontal view towards traffic being marked off by horizontal broken lines15 and 16. Figure 3 shows that each horizontal rotor is equipped with six bars, also called pin beams 17, for receiving the rake teeth. Figure 2 shows that of these six respective inclined pin beams 17 of the horizontal rotors only two reside in the driver's view. The remaining four pin beams are prevented from being seen either because of a pin beam located closer to the driver or because of a beam of the secondary frame. Figure 2 further shows that the frames 18 and 19 of the inclined horizontal rotors in the driver's view are almost completely prevented from being seen because of the secondary frames or a pin beam.

Figure 3 shows a principle solution for a positioning system by which the pin beams 17 of the inclined horizontal rotors may be locked in to the transport position for road transportation shown in Figure 2 wherein they are the least obstructive to the view ahead. A driven end plate 30 is attached directly to the axis of a driving motor 20 and the motor is screwed to a plate 21 attached to the frame 18 of the horizontal rotors. The plate 21 is provided with a sprung locking device 22 for road transportation. Figure 4 shows a section of this sprung locking device.

The locking device operates such that during work, a locking pin 23 remains completely withdrawn in a guide sleeve 24. Upon activation of the locking device, the locking pin turns 180° and a spring 25 presses the locking pin 23 against the end plate 30. In a preferred embodiment, the end plate is provided with six apertures. Thus, the number of apertures corresponds with that of pin beams in the horizontal rotor. This construction makes the locking device an indexing one, i.e. the apertures are positioned so that when the horizontal rotor slowly rotates in a front lift of a tractor, the locking pin enters one of the apertures, whereby the horizontal rotor becomes locked in to the position shown in Figure 2. Owing to this locking, the pin beams 17 in the driver's view mainly reside behind one another, alternatively behind a frame beam 4 or 5, so as to optimize the driver's view ahead during road transportation. It is, of course, completely possible even to utilize locking devices of a friction type in order to position the pin beams.

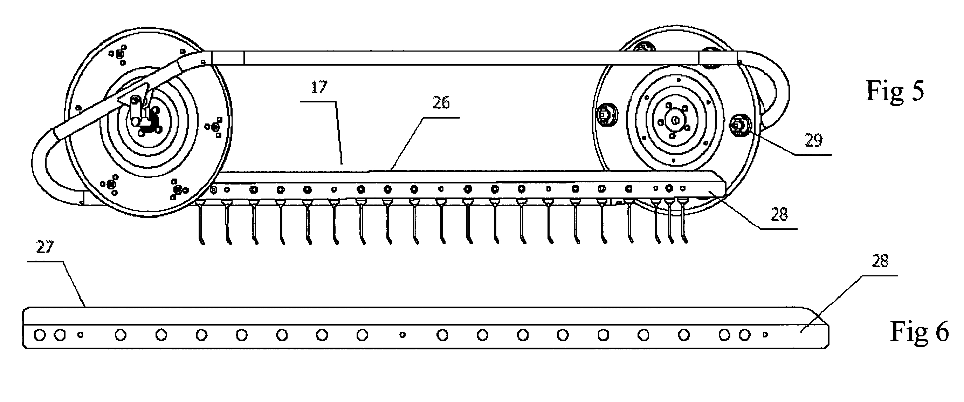

Figure 5 shows an inclined horizontal rotor which, for the sake of clarity, is presented with only one pin beam 17 visible. In this embodiment, the pin beam is provided with readily detachable guide plates 26 in order to increase the swathing capacity and to enable higher driving speeds during work. The guide plates cover the fastening of the rake teeth to the pin beam 17 and decrease the risk of blades of grass being caught thereby and becoming thrown over the rotor, which would cause waste. Identical guide plates 26 are naturally mounted on all pin blades of the horizontal rotor. These guide plates 26 may preferably be used if the swather is connected to the normal three-point lifting device provided at the rear of the tractor since in such a case the swather does not obstruct the driver's view ahead. Figure 6 shows a partial enlargement of the guide plate 26. It can be seen in the figure that the guide plates are attached to the pin beams only by few, e.g. three, screws so as to make a possible demounting/mounting quicker. The guide plates may even be attached to the pin beams by quick-release locks that allow a quick demounting/mounting without any tools.

Figures 5 and 6 further show that an end 28 which in the driving direction is the rear end of the guide plate 26 is prolonged and bevelled such that it in the driving direction mainly covers a bearing unit 29 of the entire pin beam 17 in order to enable the grass pressing against the guide plate to be able as easily as possible to glide in to swaths without any grass tufts being caught by the bearing units 29 and becoming thrown over the horizontal rotor.

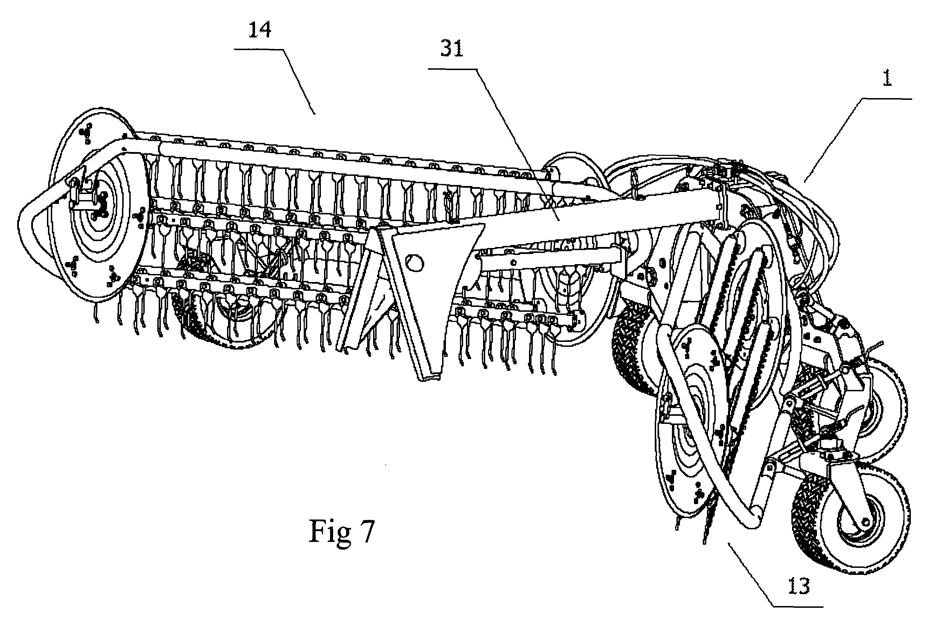

Figure 7 shows a conventional three-point fastening 31 by which the present swather may be connected e.g. to a normal three-point lift provided at the rear of a tractor and used as a normal mounted swather.

The above description and the figures contained therein are only intended to clarify the present solution for a construction of a mounted swather. Thus, the solution is not restricted only to the embodiment described above or in the attached claims but many variations or alternative embodiments are possible within the scope of the idea described in the attached claims.

The device may thus be provided e.g. with inclined horizontal rotors of a type other than those shown in the figures. The rotor units 13 and 14 may even completely lack frames 18 and 19 of their own, and be attached directly to the secondary frames 4 and 5.

## Claims

1. A-mounted swather used in agriculture for harvesting forage, such as grass, hey or straw, the swather comprising two work units (13, 14) of a type of inclined horizontal rotors (13,14) that are hung on a central frame (1), the horizontal rotors (13,14) being provided with rake teeth arranged on pin beams (17) that are substantially horizontal in a working position,
**characterized in that**
the inclined horizontal rotors (13, 14), in connection with installation of the swather in a front lift of a tractor, by means of a locking device (22) indexing according to the number of pin beams (17) for road transportation and with the pin beams (17) substantially in a vertical plane parallel to a driving direction, may be locked in to a position wherein the pin beams (17) in a driver's view during road transportation mainly reside behind one another, alternatively behind a frame beam (4, 5), in order to thus optimize the driver's view ahead.

2. A mounted swather as claimed in claim 1, **characterized in that** the locking device (22) comprises a guide sleeve (24) and a locking pin (23) which is movable therein and which is arranged to cooperate with an end plate (30) arranged in the horizontal rotor, whereby a spring (25) is arranged to press the locking pin (23) against the end plate and apertures formed therein.

3. A mounted swather as claimed in claim 1, **characterized in that** the locking device (22) is of a friction type.

4. A mounted swather as claimed in any one of claims 1 to 3, **characterized in that** the pin beams (17) are provided with quickly mountable/demountable guide plates (26) in order to increase swathing capacity.

5. A mounted swather as claimed in claim 4, **characterized in that** the guide plates (26) are fastened to the pin beams (17) by quick-release locks which allow mounting/demounting without any tools.

6. A mounted swather as claimed in claim 4 or 5, **characterized in that** the guide plates (26) have a rear end (28) which is prolonged and bevelled such that it in the driving direction mainly covers a bearing unit (29) of the pin beam (17).

7. A mounted swather as claimed in any one of the preceding claims, **characterized in that** the central frame (1) is provided with fasteners (2, 3) for a three-point fastening (31) arrangeable therein and enabling the swather to be connected to a normal three-point lifting device provided at a tractor's rear for swathing.

8. A mounted swather as claimed in any one of the preceding claims, **characterized in that** the swather, without any modification, may be used connected to the rear of a tractor equipped with a reversible driving position.

## Patentansprüche

1. Ein Anbauschwader, der in der Landwirtschaft zum Ernten von Futter, beispielsweise Gras, Heu oder Stroh, verwendet wird, wobei der Schwader zwei Arbeitseinheiten (13, 14) eines Typs mit geneigten horizontalen Rotoren (13, 14) aufweist, die an einem Zentralrahmen (1) befestigt sind, wobei die horizontalen Rotoren (13, 14) mit an Bolzenarmen (17) angeordneten Rechenzähnen versehen sind, welche Bolzenarme (17) im Betriebszustand im Wesentlichen horizontal sind, **dadurch gekennzeichnet, dass** die geneigten horizontalen Rotoren (13, 14), bei der Montage des Schwaders an den Frontlader eines Traktors, mit Hilfe von einer indexierenden Verriegelungsvorrichtung (22) entsprechend der Anzahl der Bolzenarme (17) und mit den Bolzenarmen (17) im Wesentlichen in einer vertikalen Ebene, parallel zu der Fahrrichtung, für Straßentransport in eine Position verriegelt werden können, in welcher sich die Bolzenarme (17) im Sichtfeld eines Fahrers während des Straßentransportes hauptsächlich hinter einander befinden, alternativ hinter einem Rahmenarm (4, 5), damit so die Sicht des Fahrers nach vorne optimiert wird.

2. Ein Anbauschwader gemäß dem Patentanspruch 1, **dadurch gekennzeichnet, dass** die Verriegelungsvorrichtung (22) eine Leithülse (24) und einen in ihr beweglichen Verriegelungsbolzen (23) aufweist, der angeordnet ist, mit einer in dem horizontalen Rotor angeordneten Endplatte (30) zusammenzuwirken, wobei eine Feder (25) angeordnet ist, den Verriegelungsbolzen (23) gegen die Endplatte und die darin ausgeformten Öffnungen zu drücken.

3. Ein Anbauschwader gemäß dem Patentanspruch 1, **dadurch gekennzeichnet, dass** die Verriegelungsvorrichtung (22) von einem Friktionstyp ist.

4. Ein Anbauschwader gemäß einem der Patentansprüche 1 bis 3, **dadurch gekennzeichnet, dass** die Bolzenarme (17) mit schnell zu montierenden/abzumontierenden Leitplatten (26) versehen sind, um die Kapazität des Schwaderns zu erhöhen.

5. Ein Anbauschwader gemäß dem Patentanspruch 4, **dadurch gekennzeichnet, dass** die Leitplatten (26) an den Bolzenarmen (17) mit Schnepperschlössen versehen sind, die ein Montieren/Abmontieren ohne irgendwelche Werkzeuge erlaubt.

6. Ein Anbauschwader gemäß dem Patentanspruch 4 oder 5, **dadurch gekennzeichnet, dass** die Leitplatten (26) ein hinteres Ende (28) aufweisen, das derart verlängert und abgeschrägt ist, dass es in der Fahrrichtung hauptsächlich eine Lagereinheit (29) des Bolzenarmes (17) verdeckt.

7. Ein Anbauschwader gemäß einem der vorhergehenden Patentansprüche, **dadurch gekennzeichnet, dass** der Zentralrahmen (1) mit Verschlüssen (2, 3) versehen ist, um darin eine Dreipunktaufhängung (31) zu arrangieren und den Anschluss des Schwaders an einen, im Heck des Traktors befindlichen normalen Dreipunktkraftheber für das Schwadern zu ermöglichen.

8. Ein Anbauschwader gemäß einem der vorhergehenden Patentansprüche, **dadurch gekennzeichnet, dass** der Schwader, ohne irgendeine Modifikation, angeschlossen am Heck eines mit einer reversiblen Fahrposition versehenen Traktors verwendet werden kann.

## Revendications

1. Andaineur monté utilisé dans l'agriculture pour récolter le fourrage, tel que l'herbe, le foin ou la paille, l'andaineur comprenant deux unités de travail (13, 14) d'un type ayant des rotors horizontaux inclinés (13, 14) qui sont accrochés sur un châssis central (1), les rotors horizontaux (13, 14) étant dotés de dents de râteau agencées sur des poutres à broches (17) qui sont sensiblement horizontales dans une position de travail,
**caractérisé en ce que**
les rotors horizontaux inclinés (13, 14), lors de l'installation de l'andaineur dans un élévateur avant d'un tracteur, au moyen d'un dispositif de verrouillage (22) réalisant un indexage selon le nombre de poutres à broches (17) pour le transport routier et des poutres à broches (17) sensiblement dans un plan vertical parallèle à une direction d'entraînement, peuvent être verrouillés dans une position dans laquelle les poutres à broches (17) dans le champ de vision d'un conducteur pendant le transport routier résident principalement les unes derrière les autres, en alternance derrière une poutre de châssis (4, 5) afin d'optimiser ainsi le champ de vision conducteur vers l'avant.

2. Andaineur monté selon la revendication 1, **caractérisé en ce que** le dispositif de verrouillage (22) comprend un manchon de guidage (24) et une broche de verrouillage (23) qui est mobile à l'intérieur et qui est agencée pour coopérer avec une plaque d'extrémité (30) agencée dans le rotor horizontal, un ressort (25) étant agencé pour appuyer la broche de verrouillage (23) contre la plaque d'extrémité et les ouvertures formées à l'intérieur.

3. Andaineur monté selon la revendication 1, **caractérisé en ce que** le dispositif de verrouillage (22) est du type à friction.

4. Andaineur monté selon l'une quelconque des revendications 1 à 3, **caractérisé en ce que** les poutres à broches (17) sont pourvues de plaques de guidage (26) pouvant être rapidement montées/démontées afin d'améliorer la capacité d'andainage.

5. Andaineur monté selon la revendication 4, **caractérisé en ce que** les plaques de guidage (26) sont arrimées aux poutres à broches (17) par des verrous à libération rapide qui permettent un montage/démontage sans aucun outil.

6. Andaineur monté selon la revendication 4 ou 5, **caractérisé en ce que** les plaques de guidage (26) ont une extrémité arrière (28) qui est prolongée et biseautée de sorte qu'elle couvre principalement dans la direction d'entraînement une unité de support (29) de la poutre à broches (17).

7. Andaineur monté selon l'une quelconque des revendications précédentes, **caractérisé en ce que** le châssis central (1) est doté de moyens de fixation (2, 3) pour une fixation en trois points (31) pouvant être agencés à l'intérieur et permettant de raccorder l'andaineur à un dispositif élévateur en trois points normal disposé à l'arrière d'un tracteur pour l'andainage.

8. Andaineur monté selon l'une quelconque des revendications précédentes, **caractérisé en ce que** l'andaineur, sans aucune modification, peut être utilisé raccordé à l'arrière d'un tracteur équipé d'un poste de conduite réversible.
